# EUROPÄISCHE PATENTSCHRIFT

(11) **EP 4 095 639 B1**
(45) Veröffentlichungstag und Bekanntmachung des Hinweises auf die Patenterteilung: **26.04.2023**
(21) Anmeldenummer: 21175569.9
(22) Anmeldetag: 25.05.2021
(51) Int. Cl.: G05D 1/02

(54) **NAVIGIEREN EINES FAHRZEUGS MIT SPURFÜHRUNG**
NAVIGATION OF A VEHICLE WITH LANE ASSIST
NAVIGATION D'UN VÉHICULE AVEC ASSISTANCE AU MAINTIEN DANS LA VOIE

(43) Veröffentlichungstag der Anmeldung: 30.11.2022
(73) Patentinhaber: SICK AG, 79183 Waldkirch (DE)
(72) Erfinder: Röwekämper, Jörg, 79183 Waldkirch (DE); Bohnert, Marco, 79183 Waldkirch (DE)

(56) Entgegenhaltungen:
- EP-A1- 0 374 294
- EP-A1- 3 795 949
- US-A1- 2003 146 031

## Beschreibung

Die Erfindung betrifft ein Verfahren zum Navigieren eines Fahrzeugs längs einer vorgegebenen Spur und eine virtuelle Spurführungsvorrichtung für ein Fahrzeug nach dem Oberbegriff von Anspruch 1 beziehungsweise 13.

Im Bereich des autonomen Fahrens im Straßenverkehr bleiben trotz der gegenwärtigen Euphorie zahlreiche technische und rechtliche Fragen noch ungeklärt. Im Innenbereich sind die Umgebungsbedingungen kontrollierter, und schon länger werden selbstfahrende Fahrzeuge eingesetzt, um Material ohne menschliche Hilfe zwischen verschiedenen Stationen zu transportieren. Das selbständige Bewegen von einem Ort zum anderen ist ein wichtiges Thema der mobilen Robotik.

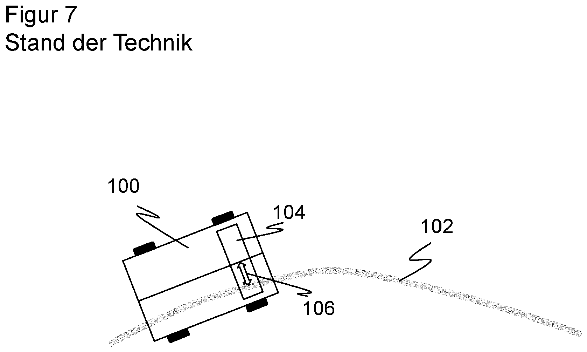

Ein in Figur 7 skizziertes herkömmliches Navigationsverfahren für ein Fahrzeug 100, beispielsweise ein fahrerloses Transportfahrzeug (AGV, Automated Guided Vehicle), basiert auf einer Spurführung durch eine Leitlinie oder physische Spur 102. Die Spur 102 ist beispielsweise als optisch erfassbares Band mit speziellen Farben oder Mustern oder als magnetisches Band auf den Boden geklebt oder in den Boden eingelassen. Ein Spurführungssensor 104 mit zur Spur 102 passendem Sensorprinzip, d.h. beispielsweise eine Kamera oder ein Hall-Sensor, erfasst die Position der Spur 102 unter dem Fahrzeug 100. Der Spurführungssensor 104 ist orthogonal zur Spur 102 angebracht und misst jeweils den Abstand 106 zwischen seinem Mittelpunkt und der Spur 102. Mit dieser Information über den Abstand 106 kann das Fahrzeug 100 seinen Kurs halten oder erforderlichenfalls korrigieren, um der Spur 102 kontinuierlich zu folgen. Die Sensorik und Verarbeitung der Sensordaten ist recht einfach und robust, denn es wird weder eine absolute Lokalisierung des Fahrzeugs 100 noch eine Pfadplanung für die Navigation benötigt.

Eine in den Boden eingelassene Spur 102 kann nur mit hohem Aufwand verändert werden, und deshalb kommt dies in modernen Produktionsumgebungen immer seltener zum Einsatz. Eine aufgeklebte Spur 102 bietet eine gewisse Flexibilität, da sie vergleichsweise einfach in der Anlage installiert wird, wobei das Entfernen oder Verändern bereits nur mit Lösungsmitteln und unter hohem Personaleinsatz möglich ist. Außerdem ist eine solche Spur 102 einer hohen Belastung während des Betriebs der Anlage ausgesetzt. Durch Abnutzung und Verschmutzung kann es dann zu Fehlsteuerungen kommen, beziehungsweise das Fahrzeug 100 ist nicht mehr in der Lage, auf der vorgegebenen Spur 102 weiterzufahren, bis die Defekte durch Servicepersonal behoben sind. Ein weiterer Nachteil der herkömmlichen Spurführung ist, dass zur genauen Erkennung der Orientierung des Fahrzeuges 100 zur Spur 102 häufig die Messung von mehreren, bis zu vier, Spurführungssensoren 104 kombiniert wird, was die Kosten in die Höhe treibt.

Alternativ zu einer Spurführung sind Navigationsverfahren bekannt, die auf einer berührungslosen Konturerfassung der Umgebung basieren. Die natürlichen Konturen, an denen sich das Fahrzeug orientiert und lokalisiert, können überall oder an kritischen Stellen durch eigens angebrachte Reflektoren ergänzt oder ersetzt werden. Eine erforderliche Karte mit Konturinformationen der Umgebung wird entweder vorab erstellt oder entsteht während des Navigierens (SLAM, Simultaneous Localisation and Mapping). Hier muss das Fahrzeug mittels Pfadplanung selbständig seinen Weg von seiner derzeitigen Position zu einem Zielpunkt finden. Das ist weitaus komplexer und aufwändiger als das oben genannte Verfahren mit Spurführung. Bei Störungen der Pfadplanung ist der Einsatz von geschultem Fachpersonal notwendig.

Um die Vorteile der Flexibilität der freien Navigation mit der einfachen Pfadplanung der Spurführung zu kombinieren, werden im Stand der Technik Navigationssysteme vorgeschlagen, die als virtuelle Spurführungssysteme bezeichnet werden können. Dabei fährt das Fahrzeug in einer Einlern- oder Umstellungsphase eine vorgegebene, insbesondere physische Spur ab und erzeugt sich eine Karte der Umgebung. Die Spur merkt sich das System virtuell als Fahrbahn oder Trajektorie. In einer nachfolgenden Betriebsphase navigiert das Fahrzeug anhand einer Konturvermessung der Umgebung und der Karte auf der vorgegebenen Trajektorie, wobei eine ehemals physische Spur nun als virtuelle Spur wirkt. Das weitere Schicksal der physischen Spur ist dann ohne Belang. Dieses Vorgehen hat den Charme einer besonders einfachen Umrüstung, da die vorhandene physische Spur übernommen wird. Es ist dabei aber nicht erforderlich, von einer physischen Spur auszugehen, die Spur kann alternativ von Anfang an aus einer Fahrtrajektorie geschätzt oder virtuell vorgegeben sein.

Ein derartiges virtuelles Spurführungssystem ist beispielsweise in der EP 3 795 949 A1 beschrieben. Aus der EP 3 167 342 B1 ist ein virtuelles Spurfolge- und Umrüstverfahren für autonome Fahrzeuge bekannt. Die EP 2 818 954 A2 offenbart ein fahrerloses Transportfahrzeug und ein Verfahren zum Planen einer virtuellen Spur. Die DE 10 2012 207 269 A1 offenbart ein Verfahren zum Betreiben eines fahrerlosen Transportfahrzeugs, das in einer virtuellen Karte eine virtuelle Spur aufweist, die einer realen Spurzugeordnet ist. Die WO 2018/051081 A1 befasst sich mit der Anpassung eines spurfolgenden AGV. Die Firma Götting vertreibt unter dem Namen HG73650 einen Bahnführungsrechner für eine virtuelle Spur, die aus Segmenten mit jeweils vier diskreten Stützpunkten zusammengesetzt ist, wobei das Fahrzeug jeweils zu dem nächsten Stützpunkt gesteuert wird. Bis auf Diskretisierungsfehler durch die endliche Anzahl Stützpunkte entspricht das dem herkömmlichen kürzesten Abstand 106 aus Figur 7.

Die US 2003/0146031 A1 offenbart eine elektronische Spur, mit der Fahrzeuge auf einer Straße ähnlich Zügen auf einem Gleis geführt werden. Dabei können Zusatzinformationen übermittelt werden, wie Kilometermarken oder Informationen zu aktuellen Straßenverhältnissen.

In der EP 0 374 294 A1 wird eine Anordnung zum Übertragen von Informationen an ein spurgeführtes Fahrzeug beschrieben. Dabei können Wegmarken längs oder quer zum Leitband angeordnet werden, und es kann eine Überwachung vorgenommen werden, ob das Leitband noch erfasst wird und andernfalls das Fahrzeug automatisch angehalten werden.

Es ist daher Aufgabe der Erfindung, eine verbesserte Navigation zu ermöglichen.

Diese Aufgabe wird durch ein Verfahren zum Navigieren eines Fahrzeugs längs einer vorgegebenen Spur und eine virtuelle Spurführungsvorrichtung für ein Fahrzeug nach Anspruch 1 beziehungsweise 13 gelöst. Die Spur gibt die Fahrbahn oder Trajektorie vor, das Fahrzeug navigiert insbesondere automatisch der Spur folgend, und es bedarf dank der Spurführung keiner aufwändigen Pfadplanung. Dies ist vorzugsweise nicht nur im Sinne gewisser Korridore oder Fahrstraßen gemeint, sondern das Fahrzeug übernimmt unmittelbar die Trajektorie der Spur. Die Spur selbst kann physisch oder virtuell sein.

Es wird bestimmt, wo sich das Fahrzeug relativ zu der Spur befindet. Diese Positionsinformation wäre herkömmlich der Abstand längs des Lots zur Spur. Anhand der Positionsinformation wird das Fahrzeug beispielsweise von einem Navigationssystem auf die Spur zurückgeführt beziehungsweise auf der Spur gehalten, insbesondere die Fahrzeugpose oder Fahrtrichtung in Richtung auf die Spur gehalten oder geändert. Eine dafür erforderliche Korrektur der Fahrzeugbewegung schließt ausdrücklich die Möglichkeit einer Nullkorrektur für den Fall ein, dass es momentan keine Positionsabweichung gibt und keine eigentliche Korrektur erforderlich ist. Das kann auch so ausgedrückt werden, dass die Fahrzeugbewegung erforderlichenfalls korrigiert wird, um das Fahrzeug im Falle einer Abweichung von der Spur auf die Spur zurückzuführen. Eine zumindest minimale Abweichung von einer Fahrt auf der Spur wird es aber in einem realen Fahrzeug ohnehin praktisch zu jedem Zeitpunkt geben.

Die Erfindung geht von dem Grundgedanken aus, die Positionsinformation vorausschauend zu erfassen und die Korrekturen für eine positionstreue Spurführung auf einen Wegpunkt in der Zukunft der Bewegung zu richten. Der Wegpunkt liegt vorzugsweise zumindest ein gewisses Wegstück voraus, insbesondere außerhalb des Fahrzeugs selbst, jedenfalls bei höheren Geschwindigkeiten. Ein solcher Wegpunkt wird als Schnittpunkt einer im Bezugssystem des Fahrzeugs verankerten geometrischen Figur mit der Spur aufgefunden. Die geometrische Figur ist beispielsweise durch End- und Eckpunkte beziehungsweise Außenkanten definiert. Das Fahrzeug wird dann zu dem Wegpunkt gesteuert, hat diesen Wegpunkt also als nächstes Ziel oder erhält zumindest eine Komponente der Bewegung in Richtung auf den Wegpunkt. Der Wegpunkt wird dann aber nur vorzugsweise tatsächlich getroffen und überfahren. Beispielsweise kann es sein, dass während der Fahrt zu dem Wegpunkt eine weitere Korrektur zu einem ferneren Wegpunkt auf der Spur erfolgt. Das Verfahren betrifft damit insbesondere den Teilschritt einer Navigation, das Fahrzeug vorausschauend bezüglich der Spur zu lokalisieren.

Die Erfindung hat den Vorteil, dass eine vorausschauende Steuerung und Regelung der Fahrzeugbewegung ermöglicht wird. Das führt zu einem schnelleren, glatteren und ruhigeren Fahrverhalten vor allem in Kurvenabschnitten der Spur. Das herkömmliche Zurückführen anhand des kürzesten Abstands ist mit jeweiligem nahem Zielpunkt zwangsläufig jedenfalls noch innerhalb des Fahrzeugs quasi zu kurzatmig und reicht gerade bei größeren Geschwindigkeiten für eine sanfte Regelung häufig nicht aus. Außerdem muss erfindungsgemäß lediglich die geometrische Figur konfiguriert werden, was sich in wenigen bis hin zu nur einem einzigen Parameter erschöpfen kann oder sogar ganz ohne Parametrierung beziehungsweise durch Default-Parameter ohne Eingaben mit Expertenwissen auskommt. Für eine herkömmliche Spurführung dagegen ist selbst im virtuellen Fall einiger Aufwand erforderlich, da zumindest zwei virtuelle 1D-Spurführungssensoren konfiguriert werden, die den kürzesten Abstand finden.

Die Positionsinformation weist bevorzugt drei Freiheitsgrade auf, nämlich zwei Positionskoordinaten sowie eine Orientierung, was ohne Beschränkung der Allgemeinheit kartesisch als x, y, yaw (Orientierung in der xy-Ebene) bezeichnet werden kann. Wegpunkte werden vorzugsweise zweidimensional in x, y bestimmt. Dazu erfolgt vorzugsweise eine Umrechnung zwischen den Fahrzeugkoordinaten und Weltkoordinaten, in denen beispielsweise auch eine virtuelle Spur abgelegt ist. Die Erfindung ist prinzipiell für ein flugfähiges Fahrzeug auf bis zu sechs Freiheitsgrade der Position und Orientierung sowie 3D-Wegpunkte erweiterbar, aber vorzugsweise soll unter einem Fahrzeug wie sonst üblich ein bodengebundenes Fahrzeug verstanden werden.

Das Fahrzeug ist bevorzugt ein fahrerloses Fahrzeug in einem Innenbereich. Der Innenbereich (Indoor Navigation) ist beispielsweise eine Fabrikhalle, ein Logistikzentrum oder eine sonstige Anlage im industriellen Umfeld. Fahrerlose Fahrzeuge gibt es dafür in unterschiedlichen Bauformen und unter verschiedensten Namen. Nicht abschließend seien FTF (Fahrerloses Transportfahrzeug), AGV (Automated Guided Vehicle), IMR (Industrial Mobile Platforms) und mobile Roboter genannt. Alternativ könnte auch ein Fahrzeug im Außenbereich erfindungsgemäß navigieren. Das kann sich auf den öffentlichen Straßenverkehr erstrecken, aber dort ist eine Spurführung regelmäßig unangemessen. Vielmehr sollte dort das Fahrzeug auf unerwartete Situationen reagieren können und dazu zumindest lokal seinen Fahrweg selbst bestimmen. Grundsätzlich wäre auch eine dreidimensionale Erweiterung einer Spurführung in drei Dimensionen beispielsweise für ein UAV (Unmanned Aerial Vehicle) denkbar.

Im Falle mehrerer Schnittpunkte wird bevorzugt ein Schnittpunkt in Fahrtrichtung ausgewählt, insbesondere der längs der Spur nächstkommende. Die geometrische Figur kann je nach eigener Ausgestaltung sowie Verlauf der Spur mehrere Schnittpunkte mit der Spur aufweisen. Dann erfolgt zunächst eine Auswahl in Fahrtrichtung, die hier nur ganz grob binär in nach vorne und nach hinten zu unterscheiden ist. Ein Wegpunkt nach hinten läge auf dem soeben befahrenen Spurabschnitt, anzusteuern ist ein Wegpunkt nach vorne. Auch nach vorne kann es mehrere Schnittpunkte geben, wenn die Spur eine Kurve einschlägt. In diesem Falle wird vorzugsweise der nächste Schnittpunkt angefahren, um der Spur treu zu folgen. Alternativ wäre denkbar, stattdessen gezielt einen ferneren Schnittpunkt anzusteuern und so auf dem weiteren Fahrweg die Kurve zu schneiden. Je nach Anwendung und Umgebung kann das eine erlaubte Abkürzung oder unerwünscht und gefährlich sein.

Die geometrische Figur wird bevorzugt auf einen Fahrzeugnavigationspunkt des Fahrzeugs bezogen, insbesondere einen Fahrzeugmittelpunkt, einen Fahrzeugschwerpunkt, einen Punkt auf einer Radachse oder einen Punkt auf einem Rad. Dadurch kann das Fahrzeug in vielerlei Hinsicht als Punkt behandelt werden, was die Berechnungen erheblich vereinfacht. Trotzdem sind aus dem Fahrzeugnavigationspunkt in Kenntnis der Fahrzeuggeometrie alle relevanten Informationen ableitbar. Eine für den Fahrzeugnavigationspunkt bestimmte Bewegung muss noch konkret auf Lenkbewegungen und dergleichen umgerechnet werden, aber das ist an sich bekannt und nicht Gegenstand der Erfindung. Prinzipiell wären mehrere Fahrzeugnavigationspunkte oder ein komplexeres Fahrzeugmodell denkbar, aus denen dann durch Interpolation oder sonstige Modellierung die erforderlichen Korrekturen der Fahrzeugbewegung bestimmt werden.

Vorzugsweise wird zyklisch ein Wegpunkt bestimmt und das Fahrzeug zu dem Wegpunkt gesteuert. Daraus ergeben sich dann Steuerungszyklen, die vorzugsweise kurz genug sind, um eine kontinuierliche, gleichmäßige Fahrzeugbewegung längs der Spur zu ermöglichen.

Das Fahrzeug wird bevorzugt durch eine Regelung anhand wiederholter Bestimmung von Wegpunkten auf der Spur gehalten. Die Regelung hat zum Ziel, die Positionsabweichung des Fahrzeugs auf Null zu regeln, mit anderen Worten genau der Spur zu folgen. Dazu werden immer wieder, vorzugsweise in kurzen Regelungszyklen, neue Wegpunkte bestimmt und angesteuert.

Vorzugsweise wird aus der gegenwärtigen Fahrzeugbewegung mindestens eine künftige Fahrzeugposition zu mindestens einem späteren Zeitpunkt bestimmt, zu der mindestens einen künftigen Fahrzeugposition mindestens ein weiterer Wegpunkt als Schnittpunkt der geometrischen Figur mit der Spur aufgefunden und das Fahrzeug zu dem Wegpunkt und dem mindestens einen weiteren Wegpunkt gesteuert. Die künftige Fahrzeugposition ist analog der Positionsinformation des Fahrzeugs vorzugsweise in drei Freiheitsgraden X, Y und Orientierung (Yaw) zu verstehen. In dieser Ausführungsform wird versucht, noch etwas weiter vorauszuplanen. Dazu wird im ersten Schritt die Fahrzeugbewegung für einen späteren Zeitpunkt beispielsweise in der nächsten Sekunde extrapoliert. Mit dieser extrapolierten künftigen Fahrzeugposition wird ein weiterer, etwas später in der Zukunft liegender Wegpunkt nach dem gleichen Vorgehen bestimmt wie der bisher erläuterte Wegpunkt, also durch Schneiden der geometrischen Figur mit der Spur, wobei aber die geometrische Figur an dem Fahrzeug in der künftigen Fahrzeugposition festgemacht ist. Die Fahrzeugbewegung wird dann im Hinblick auf beide Wegpunkte korrigiert, den Wegpunkt aus der aktuellen Fahrzeugposition und den weiteren Wegpunkt aus der künftigen Fahrzeugposition. Analog können prinzipiell ein dritter Wegpunkt und weitere Wegpunkte bestimmt und für die Korrektur der Fahrzeugbewegung berücksichtigt werden.

Die geometrische Figur ist bevorzugt eine Linie mit festem Winkel zu dem Fahrzeug. Beispielsweise verläuft die Linie parallel zu einer Radachse oder auf einer Radachse, insbesondere durch den Fahrzeugnavigationspunkt. Ansonsten sollte ein etwaiger Versatz zu dem Fahrzeugnavigationspunkt bei der korrigierenden Steuerung der Fahrzeugbewegung berücksichtigt werden. Bei einer herkömmlichen Spurführung wird letztlich auch eine Linie von der Spur zu dem Fahrzeugnavigationspunkt gezogen, deren Winkel aber an der Spur, nämlich zu 90°, und nicht im Bezugssystem des Fahrzeugs festgelegt ist.

Die geometrische Figur ist bevorzugt eine 2D-Kontur, also eine ebene geometrische Figur. Es handelt sich dann nicht einfach um eine Linie, sondern eine Fläche beziehungsweise deren Umrandung. Durch geeignete Formwahl der geometrischen Figur lassen sich Wegpunkte mit einer gewünschten vorausschauenden Beziehung zum Fahrzeug auffinden. Für eine Navigation im Raum, beispielsweise eine Drohne, ist alternativ eine 3D-Kontur denkbar, insbesondere eine Kugel oder ein sonstiger Körper, mit dem die z-Achse zusätzlich berücksichtigt werden kann.

Die geometrische Figur ist bevorzugt ein Polygon, ein Rechteck, ein Dreieck, ein Kreis oder eine Ellipse beziehungsweise deren Umrandung. Das sind besondere Beispiele von 2D-Konturen. Insbesondere ein Kreis ermöglicht auf besonders einfache Weise, einen definierten Abstand zwischen Fahrzeugnavigationspunkt und Wegpunkt vorzugeben. Verzerrte runde Formen wie eine Ellipse oder ein weiter verzerrter Kreis sind ebenso möglich wie Mischformen zwischen runden und eckigen Formen, etwa eine geometrische Figur aus runden Abschnitten und Polygonabschnitten.

Die Größe der geometrischen Figur wird bevorzugt in Abhängigkeit von einem Fahrzeugzustand, insbesondere der Geschwindigkeit des Fahrzeugs angepasst. Die Geschwindigkeit ist ein hervorzuheben Beispiel einer Abhängigkeit vom Fahrzeugzustand beziehungsweise dessen Bewegungszustand. Andere Beispiele sind die Beschleunigung oder der Winkel der Fahrzeugpose zum Spurverlauf in der Nähe des Fahrzeugs. Die geometrische Figur kann damit situationsbedingt angepasst werden. Beispielsweise wird bei einem langsamen Fahrzeug eine näherer Wegpunkt und bei einem schnellen Fahrzeug ein fernerer Wegpunkt gesucht, indem eine kleine beziehungsweise große geometrische Figur verwendet wird. Dadurch kann mit einem der Geschwindigkeit angemessenen Richtungswechsel für eine ruhige Fahrbewegung gesorgt werden. Die Größe der geometrischen Figur ist für einen Kreis als dessen Radius oder Durchmesser besonders einfach vorzugeben. Ein Durchmesser ist allgemein als größter Abstand zweier Punkte der geometrischen Figur definiert, wobei mehrere die Größe kennzeichnende Parameter wie die Halbradien einer Ellipse denkbar sind.

Die Spur ist bevorzugt eine virtuelle Spur. Eine virtuelle Spur existiert im physischen Raum nicht oder nicht mehr beziehungsweise die Navigation ist auf eine etwaig noch existierende physische Spur nicht mehr angewiesen. Die virtuelle Spur kann beispielsweise mit einer graphischen Benutzeroberfläche auf einem Konfigurationsrechner vorgegeben werden, oder sie ist das Ergebnis einer Pfadplanung insbesondere in einem mächtigeren System, das dem Fahrzeug selbst während dessen Navigation nicht mehr, nicht immer oder nicht schnell genug zur Verfügung steht. Es sei nochmals betont, dass Spurführung nicht lediglich bedeutet, geeignete Straßen zu einem Zielort vorzugeben, das ließe doch wieder eine Pfadplanung im lokalen Maßstab übrig und wäre keine Spurführung. Die virtuelle Spur hingegen gibt für jeden Ort und Zeitpunkt vor, wo sich das Fahrzeug zu bewegen hat. Die virtuelle Spur wird insbesondere aus einer physischen Spur eingelernt. Anfänglich gibt es demnach eine physische Spur, wie eine optische oder magnetische Spur auf dem Boden. Daraus wird eine virtuelle Spur eingelernt, die demnach nur noch in Form entsprechender Daten existiert. Das erleichtert, wie einleitend schon erklärt, die Umstellung von einer herkömmlichen, physischen Spurführung auf eine Navigationslösung mit Konturerfassung Sensoren erheblich. Die virtuelle Spur, egal ob von Anfang an virtuell oder aus einer physischen Spur eingelernt, kann anschließend virtuell weiter verändert und bearbeitet werden.

Vorzugsweise wird mit einem Konturerfassungssensor eine Kontur einer Umgebung des Fahrzeugs erfasst und die Positionsinformation anhand der Kontur bestimmt. Das Fahrzeug kann sich mit Hilfe des Konturerfassungssensors selbst lokalisieren, insbesondere unabhängig von einer physischen Spur. Beispielsweise gibt der Konturerfassungssensor eine absolute Positionsinformation in drei Freiheitsgraden x, y, Orientierung (Yaw) aus, oder dies wird aus Messdaten berechnet, die der Konturerfassungssensor bereitstellt. Zusätzliche Freiheitsgrade der Positionsinformation sind denkbar, insbesondere eine dritte Ortskoordinate z zur Berücksichtigung von Höhenunterschieden, Brückenkonstruktionen, mehreren Stockwerken oder einer Bewegungsmöglichkeit in drei Dimensionen wie bei einer flugfähigen Drohne. Der Konturerfassungssensor ist beispielsweise ein Laserscanner einschließlich eines Solid-State-Scanners oder2D-LiDAR-Sensors oder eine Kamera, insbesondere eine 3D-Kamera. Damit wird eine jeweilige Kontur der Umgebung des Fahrzeugs erfasst. Die Kontur ist insbesondere eine Punktwolke, im allgemeinen eine 3D-Punktwolke, die aber beispielsweise auf eine Ebene beschränkt und damit effektiv nur eine 2D-Punktwolke sein kann, wie bei einem abstandsmessenden Laserscanner. Die Selbstlokalisierung mit einem Konturerfassungssensor wird besonders bevorzugt mit einer virtuellen Spur kombiniert. Dann liegen Positionsinformation wie Spur in übereinstimmenden Weltkoordinaten vor oder werden dorthin transformiert, und die Berechnung von Wegpunkten ist eine rein geometrische Aufgabenstellung, die nach der Selbstlokalisierung keinerlei Sensordaten mehr benötigt. Alternative Lokalisierungstechnologien ohne Konturerfassungssensor sind auch vorstellbar, etwa auf Basis von Bluetooth, UWB, WLAN oder mittels Kamera beziehungsweise Code (Grid-Lokalisierung).

Vorzugsweise wird vorab eine Karte erstellt, in der Konturinformationen der Umgebung der Spur eingetragen sind. Das geschieht insbesondere auf mindestens einer Einlern- oder Referenzfahrt längs der Spur, während der fortlaufend die jeweilige Kontur gemessen wird, und diese Konturen werden dann zu der Karte zusammengesetzt. Dabei kann die Navigation noch mit einem herkömmlichen Spurführungssystem anhand einer physischen Spur erfolgen. Ein bevorzugtes Vorgehen beim Kartieren ist in der einleitend schon genannten EP 3 795 949 A1 beschrieben, auf die ergänzend Bezug genommen wird. Mit dieser Karte und den Messdaten des Koturerfassungssensors erfolgt vorzugsweise die Selbstlokalisierung des Fahrzeugs.

Zu der Karte ist bevorzugt mindestens eine Referenzkontur zu einer Fahrzeugposition gespeichert, insbesondere mit einem Unsicherheitsmaß von Position und/oder Orientierung. Es gibt demnach einen Referenzpunkt oder vorzugsweise viele Referenzpunkte auf der Karte, die eine bekannte Fahrzeugposition mit einer bekannten Kontur verknüpfen, so wie der Konturerfassungssensor sie beim Kartieren aufzeichnet. Die Fahrzeugposition ist weiterhin ebenso wie die Positionsinformation des Fahrzeugs vorzugsweise in drei Freiheitsgraden x, y und Orientierung (Yaw) zu verstehen.

Die Positionsinformation des Fahrzeugs wird bevorzugt durch ein Übereinanderlegen einer jeweils aufgenommenen Kontur und mindestens einer Referenzkontur bestimmt. Bei dem Übereinanderlegen oder Matchen werden die beiden zu vergleichenden Konturen, die insbesondere jeweils als Punktwolken vorliegen, in möglichst gute Übereinstimmung gebracht. Dabei wird geschätzt, welche Fahrzeugposition gegenüber der Referenzsituation diese bestmögliche Übereinstimmung liefert. Beispiele für geeignete Matchingalgorithmen sind ein Least-Square-Schätzer, aber auch stichprobenartige Verfahren wie RANSAC (Random Sample Consensus) und andere sind denkbar, insbesondere solche, die bei SLAM Verwendung finden. Der Konturenvergleich kann mit der nächsten Referenzkontur, aber auch mit mehreren Referenzkonturen in der Nachbarschaft durchgeführt werden, wobei dann beispielsweise die beste Übereinstimmung oder eine statistische Verrechnung weiterverwendet wird. Die am besten übereinstimmende Fahrzeugposition liefert die Positionsinformation, die dann auf die Spur bezogen verglichen werden kann beziehungsweise an der die geometrische Figur festgemacht wird, um die geometrische Figur mit der Spur zu schneiden. Wie bereits erwähnt, sind alternative Lokalisierungsverfahren denkbar, beispielsweise mit einer pixelbasierten, Grid-Scale-Karte und einem Partikelfilter (MCL).

In vorteilhafter Weiterbildung wird eine virtuelle Spurführungsvorrichtung für ein Fahrzeug bereitgestellt, insbesondere ein fahrerloses Fahrzeug, das einen Konturerfassungssensor zur Erfassung einer Kontur einer Umgebung des Fahrzeugs und eine Steuer- und Auswertungseinheit aufweist, in der ein erfindungsgemäßes Verfahren implementiert ist. Die Steuer- und Auswertungseinheit kann praktisch beliebig auf den Konturerfassungssensor, ein eigenes Gerät, die Fahrzeugsteuerung oder auch ein übergeordnetes System verteilt sein, wie eine Anlagensteuerung, ein Flottenmanagementsystem oder eine Cloud.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Fahrzeugs mit Konturerfassungssensor, das entlang einer Spur navigiert;
- Fig. 2: eine beispielhafte Karte mit Konturen der Umgebung der Spur;
- Fig. 3: eine schematische Darstellung verschiedener Posen während der Navigation sowie von Referenzpunkten im Bereich der Spur;
- Fig. 4: eine schematische Darstellung der Bestimmung eines Wegpunkts durch Schneiden eines Kreises um einen Fahrzeugnavigationspunkt mit der Spur;
- Fig. 5: eine schematische Darstellung ähnlich Figur 4, nun mit zwei Kreisen unterschiedlicher Radien zum Auffinden von Wegpunkten in Abhängigkeit von der Geschwindigkeit des Fahrzeugs;
- Fig. 6: eine schematische Darstellung ähnlich Figur 4, wobei der Wegpunkt nun als Schnittpunkt einer Linie im festen Winkel durch den Fahrzeugnavigationspunkt mit der Spur bestimmt wird;
- Fig. 7: eine Skizze zur Illustration einer herkömmlichen spurgeführten Navigation mit physischer Spur und einem Spurführungssensor, der die physische Spur erfasst.

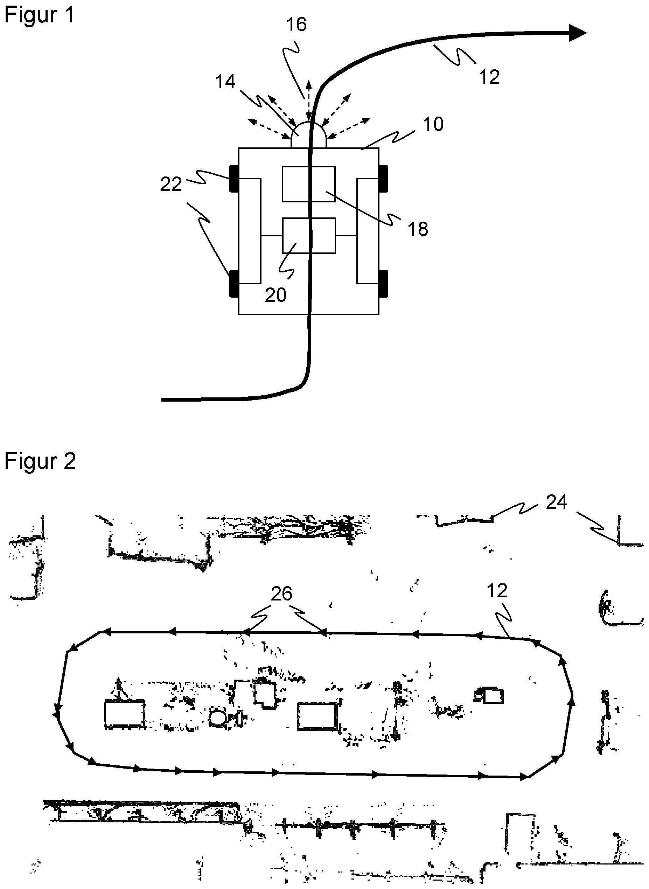

Figur 1 zeigt in einer schematischen Draufsicht ein Fahrzeug 10, das längs einer Spur 12 navigiert. Das Fahrzeug 10 weist einen Konturerfassungssensor 14 auf, der hier als Laserscanner dargestellt ist. Der Laserscanner sendet Scanstrahlen 16 in unterschiedliche Richtungen aus und misst den Abstand zu einem jeweils angetasteten Objektpunkt mit einem Lichtlaufzeitverfahren (TOF, Time of Flight). Alternativ zu einem Laserscanner oder Lidar ist ein anderer Konturerfassungssensor 14 vorstellbar, der beispielsweise auf einer Kamera, insbesondere einer 3D-Kamera wie einer Stereokamera, Lichtlaufzeitkamera oder Lichtschnittkamera, einem Radar oder Ultraschall basiert. Mehrere Konturerfassungssensoren 14 können einander für einen größeren Sichtbereich oder Rundumblick ergänzen. In alternativen Ausführungsformen basiert die Lokalisierung nicht auf einem Konturerfassungssensor, sondern einer alternativen Technologie, beispielsweise Bluetooth, UWB, WLAN, oder einer Grid-Lokalisierung mit Kamera beziehungsweise Code.

Eine Steuer- und Auswertungseinheit 18 ist mit dem Konturerfassungssensor 14 verbunden, um dessen Konturmessdaten auszuwerten und damit zu navigieren. Die Steuer- und Auswertungseinheit 18 wiederum steht in Kommunikationsverbindung mit einer Fahrzeugsteuerung 20. Die Fahrzeugsteuerung 20 wirkt auf die Räder 22 oder deren Achsen ein, um das Fahrzeug zu beschleunigen, zu bremsen und zu lenken. Umgekehrt kann die Fahrzeugsteuerung 20 von den Rädern 22 auch Sensorinformationen erhalten. Die Steuer- und Auswertungseinheit 18 kann zumindest teilweise in dem Konturerfassungssensor 14 implementiert sein. Ebenso ist auch die klare Trennung von Steuer- und Auswertungseinheit 18 und Fahrzeugsteuerung 20 nur beispielhaft zu verstehen.

Um eine Karte mit Konturinformationen in der Umgebung der Spur 12 zu erfassen, absolviert das Fahrzeug 10 in einer bevorzugten Ausführungsform zunächst eine Einlernfahrt. Dabei ist der Konturerfassungssensor 14 aktiv und erzeugt Konturinformationen der Umgebung der Spur 12, die zu einer Karte kombiniert werden. Während dieser Einlernphase navigiert das Fahrzeug 10 vorzugsweise noch nicht anhand von Konturinformationen, obwohl das prinzipiell denkbar wäre (SLAM). Beispielsweise wird das Fahrzeug 10 während der Einlernfahrt ausnahmsweise manuell gesteuert, oder es folgt einer in der Einlernphase noch vorhandenen physischen Spur 12 mit einem für das Einlernen vorübergehend eingesetzten herkömmlichen Spurführungssensor 104. Im weiteren Betrieb ist dann die physische Spur 12 verzichtbar.

Die eigentliche Navigation erfolgt dann anhand einer Lokalisierung des Fahrzeugs 10 mittels eines Abgleichs aktuell mit dem Konturerfassungssensor 14 aufgenommener Konturinformationen und der Karte. Dabei ist der gewünschte Fahrweg durch die Spur 12 vorgegeben, eine Pfadplanung findet in der Navigationsphase nach dem Einlernen nicht statt. Im Gegensatz zu einer herkömmlichen Spurführung, wie zu Figur 7 beschrieben, lokalisiert sich das Fahrzeug 10 nicht an einer physischen Spur 102, sondern anhand der Umgebungskonturen. Die Lokalisierung ist erforderlich, um sicherzustellen, dass der Spur 12 tatsächlich gefolgt wird. Die Spur 12 ist vorzugsweise virtuell oder wird als virtuell behandelt. Letzteres bedeutet, dass die Spur 12 anfangs aus einer physischen Spur 102 eingelernt sein kann, von der womöglich zumindest noch Reste vorhanden sind, die jedoch für das Lokalisieren des Fahrzeugs 10 nicht mehr beachtet werden muss, jedoch zur Erhöhung der Verlässlichkeit und Genauigkeit genutzt werden kann. Die Spur 12 weicht womöglich von der ursprünglichen physischen Spur 12 durch Nachbearbeitung in einem Computersystem ab, soweit sie nicht schon von Anfang an nur virtuell vorgegeben wurde. Das hier nur zusammenfassend erläuterte Prinzip eines virtuellen Spurführungssensors mit Erstellen einer Karte und späterer Lokalisierung und Navigation anhand der Karte wird ausführlich in der einleitend schon genannten EP 3 795 949 A1 beschrieben.

Figur 2 zeigt ein Beispiel einer Karte mit einer Kontur 24 in der Umgebung der Spur 12. Eine solche Karte entsteht aus zahlreichen Messungen des Konturerfassungssensors 14 an verschiedenen Positionen längs der Spur 12, wobei die einzelnen Konturen zu der Kontur 24 zusammengesetzt werden. Eine durch Konturerfassung erzeugte Karte und darauf basierende Lokalisierung ist nur ein Ausführungsbeispiel, die Erfindung ist darauf nicht beschränkt.

Referenzpunkte 26 symbolisieren durch die dargestellten Dreiecke die Orientierung (yaw) des Fahrzeugs 10 während einer Kartierungsfahrt. Die jeweils am Referenzpunkt 26 erfasste Kontur wird als Referenzkontur mit der zugehörigen dreidimensionalen Position (x, y, yaw) gespeichert. Zusätzlich kann sich die Steuer- und Auswertungseinheit 18 eine Unsicherheit der Position merken. Wenn ein passend dichtes Netz an Referenzpunkten 26 gewählt ist und die Referenzkonturen in ein gemeinsames Koordinatensystem transformiert werden, dann ergibt sich daraus die vollständige in Figur 2 gezeigte Kontur 24 als eine konsistente Darstellung der Umgebung in Form einer Punktwolke.

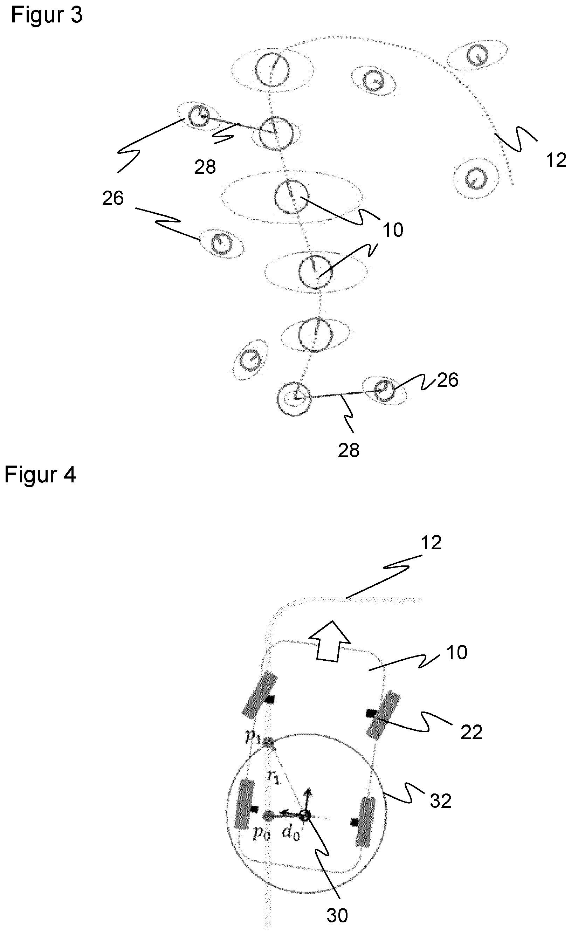

Figur 3 illustriert nochmals die Navigation längs der Spur 12 bei einer beispielhaften Lokalisierung anhand von Konturen. Das Fahrzeug 10 ist an mehreren Orten x, y mit einem Strich dargestellt, der einer dort bestimmten Orientierung (yaw) entspricht. In gleicher Weise sind mehrere Referenzpunkte 26 gezeigt, die soeben zu Figur 2 erläutert wurden. Eine umgebende Ellipse repräsentiert die jeweiligen Unsicherheiten.

Die Lokalisierung basiert auf einem Abgleich von gemessenen und bekannten Konturen. In einer vorteilhaften Ausführungsform umfasst die Navigation zwei Schritte, nämlich eine Prädiktion und eine Korrektur. Während der Prädiktion wird die Kontur einer Ausgangsposition als Keyframe gesetzt, an dem sich das Fahrzeug 10 solange orientiert, bis das Keyframe nicht mehr ausreichend zu sehen ist und durch die aktuelle Kontur ersetzt wird. Dabei schaukeln sich die Unsicherheiten nach und nach auf, die Unsicherheiten repräsentierenden Ellipsen werden immer größer. Es sind ergänzende Verfahren denkbar, um die Unsicherheiten abzumildern, wie eine Vorhersage aus der bisherigen Bewegungshistorie heraus, die beispielsweise Kalman-Filter verwenden, oder die Verwendung weiterer Sensorik, die etwa die Stellung und/oder Drehgeschwindigkeit der Räder 22 erfassen.

Der zweite Schritt ist eine Korrektur anhand der Referenzpunkte 26, mit der ein Abgleich zur Karte realisiert wird. Dabei muss nicht nach jedem Prädiktionsschritt ein Korrekturschritt erfolgen, sondern es können mehrere Prädiktionsschritte erfolgen, bevor ein Korrekturschritt ausgeführt wird. Dazu wird die aktuell aufgenommene Kontur des Konturerfassungssensors 14 mit der Referenzkontur verglichen ("Scan-Matching"). Ein solcher Scan-Matching-Algorithmus ist an sich bekannt. Als Eingangswerte erhält der Scan-Matching-Algorithmus zwei Konturen beispielsweise in Form von 2D- oder 3D-Punktwolken in einem gemeinsamen Koordinatensystem, wie Fahrzeugkoordinaten. Dann wird die Transformation gesucht, mit denen die geometrischen Distanzen zwischen den jeweiligen Punkten minimiert werden. Das Ergebnis dieses Konturvergleichs ist demnach eine optimale Transformation, die beide Konturen in bestmögliche Übereinstimmung bringt.

Diese Transformation wird dann verwendet, um die Fahrzeugpose zu korrigieren. Das geschieht in Figur 3 zweimal und wird durch Linien 28 gezeigt. Die Unsicherheit reduziert sich aufgrund der Korrektur. Die Korrektur kann noch einer Plausibilitätsprüfung unterzogen werden.

Der Abgleich kann auch zu mehreren Referenzkonturen erfolgen. Es werden vorzugsweise immer die nächste beziehungsweise die nächsten Referenzkonturen verwendet. Bei dem Konturvergleich können erkannte Reflektoren, die in der Umgebung angebracht sind, höher gewichtet werden als Konturen mit normaler Remission. Konturen mit normaler Remission ergeben sich aus natürlichen Objekten, wie beispielsweise Gebäude, Regale, Wände und dergleichen, während Reflektoren eigens allein für eine bessere Lokalisierung angebracht sein können. Dies kann die Robustheit des Systems erhöhen, da Reflektoren eine besonders sichere Assoziation zwischen kartierter Struktur und aufgenommenem Scan ermöglichen. Das unter Bezugnahme auf die Figuren 2 und 3 beschriebene Lokalisierungs- und Navigationsverfahren ist ein Beispiel. Die nun beschriebenen Wegpunkte hängen von dieser konkreten Umsetzung nicht ab, es sind andere Technologien vorstellbar, mit denen sich das Fahrzeug 10 bezüglich der Spur 12 lokalisiert beziehungsweise längs der Spur 12 navigiert.

Figur 4 zeigt eine schematische Darstellung zur Erläuterung einer Fahrzeugregelung, mit der das Fahrzeug 10 auf der Spur 12 gehalten wird. Dazu wird ein Wegpunkt p1 auf der Spur 12 aufgefunden, den das Fahrzeug 10 ansteuert. Im Gegensatz zu dem herkömmlichen Vorgehen ist die Erfindung nicht mehr auf einen physischen Spurführungssensor 104 angewiesen, der mit einer eindimensionalen Erfassung den Abstand zu der Spur 102 bestimmt. Das ermöglicht, sich nicht starr am nächsten Punkt auf der Spur 12 zu orientieren, sondern vorausschauend einen Wegpunkt p1 auf dem als nächstes befahrenen Abschnitt der Spur 12 aufzufinden.

Zu Vereinfachung wird vorzugsweise ein Fahrzeugnavigationspunkt 30 des Fahrzeugs 10 definiert, an dem die Lokalisierung und vorzugsweise der Ursprung eines auf das Fahrzeug bezogenen Koordinatensystems festgemacht wird. Das genügt als Information, da die Steuer- und Auswertungseinheit 18 beziehungsweise die Fahrzeugsteuerung 20 bei Bedarf auf ein genaueres Fahrzeugmodell zurückgreifen kann, in dem der Fahrzeugnavigationspunkt 30 eine wohldefinierte Rolle einnimmt. Mit p0 ist nochmals zum Vergleich der herkömmlich bestimmte nächste Punkt auf der Spur 12 im Abstand d0 bezeichnet.

Um den Wegpunkt p1 aufzufinden, wird eine geometrische Figur 32 oder 2D-Kontur betrachtet, die an dem Fahrzeug 10 und vorzugsweise dem Fahrzeugnavigationspunkt 30 festgemacht ist. Im Beispiel der Figur 4 ist die geometrische Figur 32 ein Kreis mit einem vorzugsweise konfigurierbaren Radius r1 um den Fahrzeugnavigationspunkt 30. Solange das Fahrzeug 10 sich nicht zu weit von der Spur 12 entfernt, was bei funktionierender Regelung nicht passiert, schneidet die geometrische Figur die Spur 12 im Wegpunkt p1. Die Steuer- und Auswertungseinheit 18 kennt sowohl die Fahrzeugposition (x, y, yaw) als auch die Spur 12 und kann diese Schnittpunktbestimmung daher mit einfachen geometrischen Mitteln durchführen.

Die geometrische Figur 32 schneidet die Spur 12 je nach Situation möglicherweise mehrfach. In Figur 4 gibt es einen weiteren, nicht bezeichneten Schnittpunkt gegen die mit einem Pfeil angedeutete Fahrtrichtung des Fahrzeugs 10. Jener weitere Schnittpunkt ist nicht von Interesse, da dieser Teil der Spur 12 soeben befahren wurde. Es wird daher als Wegpunkt p1 ein in Fahrtrichtung liegender Schnittpunkt ausgewählt. Vor einer Kurve kann es zusätzliche Schnittpunkte geben. Alle solchen Schnittpunkte halten das Fahrzeug 10 auf der Spur, wenn sie als Wegpunkte ausgewählt werden. Es ist dann eine besonders treue Spurführung durch Wahl des nächsten Schnittpunkts oder eine etwas raschere Fortbewegung durch Wahl des fernsten Schnittpunkts sowie eine gemeinsame Berücksichtigung der Schnittpunkte möglich.

Die Wahl der geometrischen Figur 32 als Kreis ist besonders geeignet und einfach zu handhaben. Alternativ ist ein Polygon, insbesondere Quadrat oder Rechteck, eine Ellipse oder ganz allgemein eine beliebige 2D-Kontur denkbar. Die 2D-Kontur sollte jedoch einfach bleiben, da bei einer komplexen geometrischen Figur 32 mit zerklüfteter Gestalt unerwünschte Mehrdeutigkeiten auftreten könnten, wo dann eine einfache Schnittpunktbetrachtung mit den wenigen erläuterten heuristischen Regeln für in Fahrrichtung und gegen die Fahrtrichtung beziehungsweise eine Kurve der Spur 12 für das Auffinden eines Wegpunkts p1 nicht mehr ausreicht.

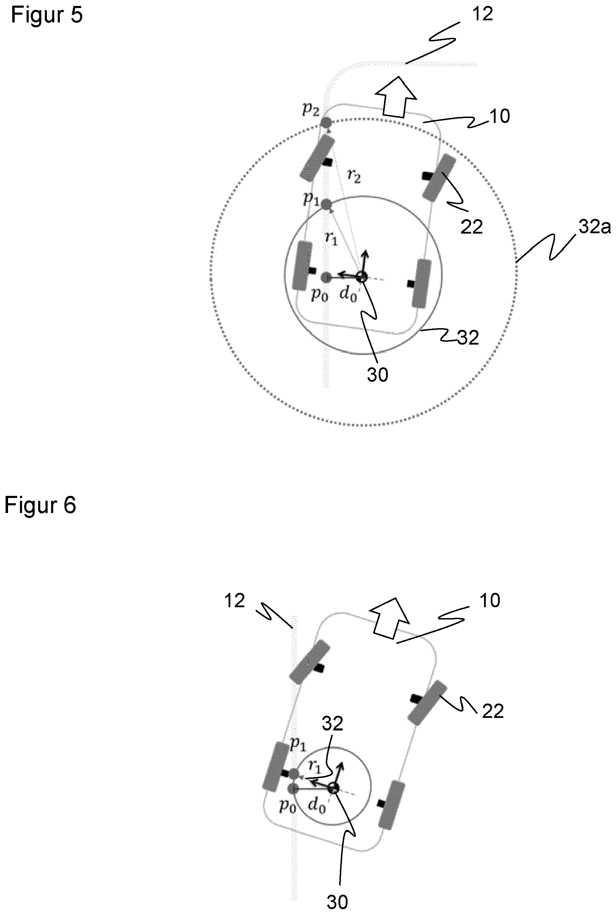

Figur 5 zeigt eine schematische Darstellung ähnlich Figur 4, wobei nun zusätzlich die Größe der geometrischen Figur 32 in Abhängigkeit von einem Fahrzeugzustand angepasst wird, insbesondere in Abhängigkeit von der Geschwindigkeit v des Fahrzeugs 10. Je nach Fahrzeugzustand wird eine kleinere geometrische Figur 32 oder eine größere geometrische Figur 32a verwendet. Im konkreten Beispiel der Figur 5 ist nochmals zum Vergleich die geometrische Figur 32 der Figur 4 in Form eines Kreises mit Radius r1 und zugehörigem Wegpunkt p1 für eine langsame Geschwindigkeit gezeigt. Bei einer höheren Geschwindigkeit wird der Radius vergrößert und nun anhand eines Kreises mit Radius r2 > r1 ein Wegpunkt p2 bestimmt. Statt lediglich zweier diskreter Klassen mit Radius r1, r2 für geringere oder höhere Geschwindigkeit sind zusätzliche Klassen etwa mit Radien r1... rn oder beispielsweise auch eine Funktion r(v) denkbar. Die Anpassung der geometrischen Figur 32 an einen Fahrzeugzustand ist nicht auf einen Kreis beschränkt. Andere geometrische Figuren 32 weisen ebenfalls eine Größe auf, beispielsweise durch erweiterte Definition des Durchmessers als größter Abstand zweier Punkt der geometrischen Figur 32.

Figur 6 zeigt eine weitere alternative Ausgestaltung der geometrischen Figur 32. Statt einer ebenen geometrischen Figur oder 2D-Kontur wird hier lediglich eine Linie verwendet, die durch den Fahrzeugnavigationspunkt 30 verläuft. Da die geometrische Figur 32 an das Fahrzeug 10 gebunden ist, steht sie in festem Winkel, hier parallel zu einer Radachse. Weiterhin bestimmt der Schnittpunkt der geometrischen Figur 32 mit der Spur 12, in diesem Fall einer Linie in festem Winkel, den Wegpunkt p1. Vorteil und Nachteil dieses Vorgehens ist, das keine Konfiguration der geometrischen Figur 32 in Abhängigkeit von einem Fahrzeugzustand beziehungsweise der Geschwindigkeit stattfindet. Das vereinfacht das Vorgehen, macht es aber auch unflexibler. Es sei noch darauf hingewiesen, dass dies keinesfalls dem herkömmlichen Vorgehen gemäß Figur 7 entspricht. Der Winkel der als Linie ausgebildeten geometrischen Figur 32 ist fest zu dem Fahrzeug 10, während herkömmlich ein Lot auf die Spur 102 gefällt wird, was am Fahrzeug 10 zu variablen Winkeln führt.

## Patentansprüche

1. Verfahren zum Navigieren eines Fahrzeugs (10) längs einer vorgegebenen Spur (12), wobei eine Positionsinformation des Fahrzeugs (10) bezüglich der Spur (12) bestimmt und anhand der Positionsinformation die Fahrzeugbewegung korrigiert wird, um es auf die Spur (12) zurückzuführen,
**dadurch gekennzeichnet,**
**dass** das Fahrzeug (10) auf die Spur (12) zurückgeführt wird, indem ein Wegpunkt (p1) auf der Spur (12) als Schnittpunkt einer im Bezugssystem des Fahrzeugs (10) festgelegten, als 2D-Kontur oder 3D-Kontur ausgebildeten geometrischen Figur (32) mit der Spur (12) aufgefunden und das Fahrzeug (10) zu dem Wegpunkt (p1) gesteuert wird, wobei im Falle mehrerer Schnittpunkte ein Schnittpunkt (p1) in Fahrtrichtung ausgewählt wird, insbesondere der längs der Spur (12) nächstkommende.

2. Verfahren nach Anspruch 1,
wobei das Fahrzeug (10) ein fahrerloses Fahrzeug in einem Innenbereich ist.

3. Verfahren nach einem der vorhergehenden Ansprüche,
wobei die geometrische Figur (32) auf einen Fahrzeugnavigationspunkt (30) des Fahrzeugs (10) bezogen wird, insbesondere einen Fahrzeugmittelpunkt, einen Fahrzeugschwerpunkt, einen Punkt auf einer Radachse oder einen Punkt auf einem Rad (22).

4. Verfahren nach einem der vorhergehenden Ansprüche,
wobei zyklisch ein Wegpunkt (p1) bestimmt und das Fahrzeug (10) zu dem Wegpunkt (p1) gesteuert wird.

5. Verfahren nach einem der vorhergehenden Ansprüche,
wobei das Fahrzeug (10) durch eine Regelung anhand wiederholter Bestimmung von Wegpunkten (p1) auf der Spur (12) gehalten wird.

6. Verfahren nach einem der vorhergehenden Ansprüche,
wobei aus der gegenwärtigen Fahrzeugbewegung mindestens eine künftige Fahrzeugposition zu mindestens einem späteren Zeitpunkt bestimmt, zu der mindestens einen künftigen Fahrzeugposition mindestens ein weiterer Wegpunkt als Schnittpunkt der geometrischen Figur (32) mit der Spur (12) aufgefunden und das Fahrzeug (10) zu dem Wegpunkt (p1) und dem mindestens einen weiteren Wegpunkt gesteuert wird.

7. Verfahren nach einem der vorhergehenden Ansprüche,
wobei die geometrische Figur (32) eine Linie mit festem Winkel zu dem Fahrzeug (10) ist.

8. Verfahren nach einem der vorhergehenden Ansprüche,
wobei die geometrische Figur (32) ein Polygon, ein Rechteck, ein Dreieck, ein Kreis oder eine Ellipse ist.

9. Verfahren nach einem der vorhergehenden Ansprüche,
wobei die Größe der geometrischen Figur (32) in Abhängigkeit von einem Fahrzeugzustand, insbesondere der Geschwindigkeit des Fahrzeugs (10) angepasst wird.

10. Verfahren nach einem der vorhergehenden Ansprüche,
wobei die Spur (12) eine virtuelle Spur ist, die insbesondere aus einer physischen Spur eingelernt wird.

11. Verfahren nach einem der vorhergehenden Ansprüche,
wobei mit einem Konturerfassungssensor (14) eine Kontur (24) einer Umgebung des Fahrzeugs (10) erfasst und die Positionsinformation anhand der Kontur (24) bestimmt wird.

12. Verfahren nach einem der vorhergehenden Ansprüche,
wobei vorab eine Karte erstellt wird, in der Konturinformationen der Umgebung der Spur (12) eingetragen sind.

13. Virtuelle Spurführungsvorrichtung für ein Fahrzeug (10), insbesondere fahrerloses Fahrzeug, mit einem Konturerfassungssensor (14) zur Erfassung einer Kontur (24) einer Umgebung des Fahrzeugs (10) und mit einer Steuer- und Auswertungseinheit (18),
**dadurch gekennzeichnet,**
**dass** in der Steuer- und Auswertungseinheit (18) ein Verfahren nach einem der vorhergehenden Ansprüche implementiert ist.

## Claims

1. A method of navigating a vehicle (10) along a predetermined track (12), wherein position information of the vehicle (10) with respect to the track (12) is determined and the vehicle movement is corrected based on the position information to return it to the track (12),
**characterized in that** the vehicle (10) is returned to the track (12) by finding a waypoint (p1) on the track (12) as the point of intersection of a geometric figure (32) with the track (12), which geometric figure is defined in the reference system of the vehicle (10) and is in the form of a 2D contour or 3D contour, and the vehicle (10) is steered to the waypoint (p1), an intersection point (p1) being selected in the direction of travel in the case of a plurality of intersection points, in particular the closest intersection point along the track (12).

2. The method according to claim 1,
wherein the vehicle (10) is a driverless vehicle in an indoor environment.

3. The method according to any of the preceding claims,
wherein the geometric figure (32) is referred to a vehicle navigation point (30) of the vehicle (10), in particular a vehicle center, a vehicle center of gravity, a point on a wheel axle or a point on a wheel (22).

4. The method according to any of the preceding claims,
wherein a waypoint (p1) is determined cyclically and the vehicle (10) is steered to the waypoint (p1).

5. The method according to any of the preceding claims,
wherein the vehicle (10) is kept on the track (12) by a control on the basis of repeated determination of waypoints (p1).

6. The method according to any of the preceding claims,
wherein at least one future vehicle position at at least one later time is determined from the current vehicle movement, at least one further waypoint is found as an intersection of the geometric figure (32) with the track (12) for the at least one future vehicle position, and the vehicle (10) is steered to the waypoint (p1) and the at least one further waypoint.

7. The method according to any of the preceding claims,
wherein the geometric figure (32) is a line with a fixed angle to the vehicle (10).

8. The method according to any of the preceding claims,
wherein the geometric figure (32) is a polygon, rectangle, triangle, circle, or ellipse.

9. The method according to any of the preceding claims,
wherein the size of the geometric figure (32) is adjusted as a function of a vehicle state, in particular the speed of the vehicle (10).

10. The method according to any of the preceding claims,
wherein the track (12) is a virtual track which in particular is learned from a physical track.

11. The method according to any of the preceding claims,
wherein a contour (24) of an environment of the vehicle (10) is detected with a contour detection sensor (14) and the position information is determined on the basis of the contour (24).

12. The method according to any of the preceding claims,
wherein a map is created in advance in which contour information of the surroundings of the track (12) is entered.

13. A virtual track guidance device for a vehicle (10), in particular a driverless vehicle, having a contour detection sensor (14) for detecting a contour (24) of an environment of the vehicle (10) and having a control and evaluation unit (18), **characterized in that** a method according to any of the preceding claims is implemented in the control and evaluation unit (18).

## Revendications

1. Procédé de navigation d'un véhicule (10) le long d'une voie (12) prédéfinie, une information de position du véhicule (10) par rapport à la voie (12) étant déterminée et le mouvement du véhicule étant corrigé à l'aide de l'information de position afin de le ramener sur la voie (12),
**caractérisé en ce que**
le véhicule (10) est ramené sur la voie (12) en trouvant un point de trajet (p1) sur la voie (12) en tant que point d'intersection d'une figure géométrique (32) définie dans le système de référence du véhicule (10) et réalisée sous la forme d'un contour 2D ou d'un contour 3D avec la voie (12) et en commandant le véhicule (10) vers le point de trajet (p1), un point d'intersection (p1) dans la direction de déplacement étant sélectionné dans le cas de plusieurs points d'intersection, en particulier le point d'intersection le plus proche le long de la voie (12).

2. Procédé selon la revendication 1,
dans lequel le véhicule (10) est un véhicule sans conducteur dans une zone intérieure.

3. Procédé selon l'une des revendications précédentes,
dans lequel la figure géométrique (32) est rapportée à un point de navigation (30) du véhicule (10), notamment un centre du véhicule, un centre de gravité du véhicule, un point sur un axe de roue ou un point sur une roue (22).

4. Procédé selon l'une des revendications précédentes,
dans lequel un point de trajet (p1) est déterminé de manière cyclique et le véhicule (10) est dirigé vers le point de trajet (p1).

5. Procédé selon l'une des revendications précédentes,
dans lequel le véhicule (10) est maintenu sur la voie (12) par un réglage basée sur la détermination répétée de points de trajet (p1).

6. Procédé selon l'une des revendications précédentes,
dans lequel au moins une position future du véhicule à au moins un moment ultérieur est déterminée à partir du mouvement actuel du véhicule, au moins un autre point de trajet est trouvé en tant que point d'intersection de la figure géométrique (32) avec la voie (12) pour ladite au moins une position future du véhicule, et le véhicule (10) est guidé vers le point de trajet (p1) et ledit au moins un autre point de trajet.

7. Procédé selon l'une des revendications précédentes,
dans lequel la figure géométrique (32) est une ligne à angle fixe par rapport au véhicule (10).

8. Procédé selon l'une des revendications précédentes,
dans lequel la figure géométrique (32) est un polygone, un rectangle, un triangle, un cercle ou une ellipse.

9. Procédé selon l'une des revendications précédentes,
dans lequel la taille de la figure géométrique (32) est adaptée en fonction d'un état du véhicule, notamment de la vitesse du véhicule (10).

10. Procédé selon l'une des revendications précédentes,
dans lequel la voie (12) est une voie virtuelle qui est notamment apprise à partir d'une voie physique.

11. Procédé selon l'une des revendications précédentes,
dans lequel un contour (24) d'un environnement du véhicule (10) est détecté avec un capteur de détection de contour (14) et l'information de position est déterminée à l'aide du contour (24).

12. Procédé selon l'une des revendications précédentes,
dans lequel on établit préalablement une carte dans laquelle sont inscrites des informations de contour de l'environnement de la voie (12).

13. Dispositif de guidage sur voie virtuelle pour un véhicule (10), en particulier un véhicule sans conducteur, avec un capteur de détection de contour (14) pour détecter un contour (24) d'un environnement du véhicule (10) et avec une unité de commande et d'évaluation (18),
**caractérisé en ce qu'**un procédé selon l'une des revendications précédentes est mis en oeuvre dans l'unité de commande et d'évaluation (18).
